# EUROPÄISCHE PATENTANMELDUNG

(11) **EP 2 348 474 A1**
(43) Veröffentlichungstag der Anmeldung: **27.07.2011**
(21) Anmeldenummer: 10151564.1
(22) Anmeldetag: 25.01.2010
(51) Int. Cl.: G06Q 30/00

(54) **Verfahren, Software und mobiles Endgerät zur Einkaufsunterstützung**

(71) Anmelder: xplace GmbH, 37073 Göttingen (DE)
(72) Erfinder: Die Erfindernennung liegt noch nicht vor
(74) Vertreter: Rehberg Hüppe + Partner

(57) **Zusammenfassung**

Die Erfindung betrifft ein Verfahren zur Unterstützung des Einkaufs von Produkten.

Erfindungsgemäß gibt der Benutzer ein Produkt vor, dessen Kauf er beabsichtigt. Bewegt sich der Benutzer mit einem mobilen Endgerät (12), beispielsweise einem Handheld oder einem Mobiltelefon, durch eine Einkaufsstrasse, so ermittelt das erfindungsgemäße Verfahren automatisiert, ob in der Nähe des mobilen Endgeräts (12) eine Verkaufsstätte (8) verfügbar ist, in welcher ein Bestand des von dem Benutzer gewünschten Produkts gegeben ist. Ist dies der Fall, wird automatisiert eine Information an das mobile Endgerät (12) übermittelt, mit welcher der Benutzer benachrichtigt wird, dass er in der Verkaufsstätte (8) in der Nähe das Produkt erwerben kann.

## Beschreibung

### TECHNISCHES GEBIET DER ERFINDUNG

Die vorliegende Erfindung betrifft ein Verfahren, welches Einsatz findet zur Unterstützung des Einkaufs von Produkten. Weiterhin betrifft die Erfindung eine entsprechende Software. Schließlich betrifft die Erfindung ein mobiles Endgerät, welches zur Unterstützung des Einkaufs von Produkten eingesetzt werden soll.

### STAND DER TECHNIK

Der herkömmliche Einkauf eines Produkts oder mehrerer Produkte in mindestens einem Warenhaus erfordert eine Planung des Kunden. Diese Planung setzt dezidierte Orts- und Angebotskenntnisse voraus, um zu bestimmen, welche Verkaufsstätten, insbesondere Handelsunternehmen und Warenhäuser, der Kunde in welcher Reihenfolge am Besten aufsucht, um die Produkte überhaupt aufzufinden oder mehrere Produkte zeitoptimiert und unter Optimierung der zurückzulegenden Wege einkaufen zu können. Selbst bei sorgfältiger vorheriger Planung, beispielsweise durch Schreiben einer Einkaufsliste mit Zuordnung der Produkte zu den einzelnen Verkaufsstätten, kann der Kunde nicht vermeiden, dass er auch Verkaufsstätten aufsucht, in denen das gewünschte Produkt überhaupt nicht vorhanden ist oder das Produkt vergriffen ist, so dass kein Bestand des Produkts in der Verkaufsstätte gegeben ist. In diesem Fall muss der Kunde die Planungen ändern mit dem Aufsuchen weiterer Verkaufsstätten, was weitere Wege und eine Verlängerung der für den Einkauf benötigten Zeit mit sich bringt, oder sogar den Einkauf abbrechen. Will der Kunde derartige Komplikationen des Einkaufs vorab vermeiden, muss dieser von zu Hause oder über ein Mobiltelefon in mehreren möglichen Verkaufsstätten anrufen und anfragen, ob das Produkt geführt wird und ein Bestand des Produkts gegeben ist.

Dies erfordert u. U. mehrere Telefonate sowie das langwierige Herstellen unterschiedlicher Verbindungen mit unterschiedlichen Abteilungen einer Verkaufsstätte - wenn überhaupt Verkaufspersonal telefonisch verfügbar ist. In jedem Fall ist der erläuterte herkömmliche Einkauf vollumfänglich von dem Kunden gesteuert, so dass dieser die vollständige Planung und Aufmerksamkeit des Kunden erfordert. Die geschilderten Probleme verstärken sich, wenn sich der Kunde in einem ihm nicht bekannten Einkaufsgebiet, beispielsweise in einer fremden Stadt befindet, wo der Kunde ohne A-Priori-Kenntnisse Verkaufsstätten "auf gut Glück" aufsuchen muss.

Zunehmend verdrängt wird dieses klassische Einkaufsverhalten durch das Einkaufen im Internet. Hier zeichnen sich unterschiedliche Trends ab:
a) Verkaufsstätten bieten ein ausschließlich dieser Verkaufsstätte zugeordnetes Internet-Portal an, mit welchem der Kunde nach A-Priori-Auswahl dieser Verkaufsstätte zunächst ein Produkt angeben kann, an welchem der Kunde Interesse hat. Ist dieses Produkt bekannt, wird eine Ausgabe erzeugt, in welcher dem Kunden Informationen zu dem Produkt an sich angeboten werden, der aktuelle Bestand des Produkts ("vier Geräte verfügbar"), eine voraussichtliche Lieferzeit und der Produktpreis angezeigt wird. Der Kunde kann dann über das Internet-Portal nach Eingabe der persönlichen Daten und des Zahlungsmodus die Bestellung aufgeben, die dann über das Internet an den Betreiber des Internet-Portals oder die Verkaufsstätte, übermittelt wird. Es erfolgt dann ein Versand des Produkts an den Kunden. Ein Beispiel für eine derartige Verkaufsstätte ist das Unternehmen Amazon. Ebenfalls möglich ist, dass datenbasierte Produkte wie Musiktitel, Filme o. ä. auf elektronischem Wege über das Internet an den Kunden geliefert werden.
b) Weiterhin bekannt sind Internet-Portals, die auch als "Preissuchmaschinen" bezeichnet werden. Für derartige Preissuchmaschinen wird ein Produkt abgefragt, an welchem der Kunde Interesse hat. Diese Abfrage erfolgt allerdings nicht an von einem Kunden spezifizierten Verkaufsstätten in Form von stationären Einzelhändlern, sondern vielmehr automatisiert bei einer Vielzahl von E-Commerce-Portalen. Die Preissuchmaschine ermittelt dann für eine Vielzahl derartigen E-Commerce-Portalen die jeweiligen Preise des Produkts. Dem Kunden wird dann eine Liste möglicher E-Commerce-Portalen angezeigt, die nach dem Preis für das Produkt sortiert sind. Die Informationen des Betreibers der Preissuchmaschine hinsichtlich des Angebots des Produkts über die E-Commerce-Portale sowie des Preises basieren auf seitens der E-Commerce-Portale geschalteten Anzeigen in den unterschiedlichen Medien, welche von dem Betreiber der Preissuchmaschine gesammelt werden. Der Kunde kann dann über die Preissuchmaschine eine elektronische Bestellung aufgeben mit Zusendung des Produkts von dem Betreiber des E-Commerce-Portals an den Kunden. Nachteilig ist, dass die Praxis zeigt, dass die von dem Betreiber der Preissuchmaschine genutzten Informationen oftmals nicht dem tatsächlichen Angebot und den Preisen der E-Commerce-Portale entsprechen. Ausfluss dieser unzureichenden Information über die Verfügbarkeit des Produkts ist, dass von derartigen Preissuchmaschinen in der Regel eine so genannte "Ampelanzeige" verwendet wird, die mit den Farben grün (Produkt verfügbar), gelb und rot (Produkt nicht verfügbar) den Anschein erwecken soll, dass exakte Informationen über die Verfügbarkeit des Produkts vorhanden sind. Hier zeigt allerdings die Praxis, dass diese Anzeigen ungenau sind und oftmals nicht zutreffend sind, so dass auch bei der Bestellung eines mit der Farbe grün gekennzeichneten Produkts die Bestellung lange dauert oder überhaupt nicht ausgeführt werden kann. Ebenfalls möglich ist, dass in der Preissuchmaschinen zunächst die Verfügbarkeit mit grün angegeben ist, aber dann von der Preissuchmaschine bei näherem Kaufinteresse unmittelbar auf die verlinkte Website des E-Commerce-Portals oder einer zugeordneten Verkaufsstätte verzweigt wird, auf welcher dann ergänzende Informationen zu der Verfügbarkeit des Produkts angeboten werden.

Vergleicht man die klassischen Einkaufsmöglichkeiten, bei denen der Kunde eine Verkaufsstätte aufsucht, mit einem Einkauf mit den dargestellten Varianten a) und b), so hat der klassische Einkauf den gravierenden Vorteil, dass der Kunde das Produkt noch am selben Tag in den Händen halten kann, während eine Versendung des Produkts für den so genannten E-Commerce mit vorangegangener Verpackung des Produkts mehrere Tage dauern kann oder für eine eilige Übermittlung Zusatzkosten mit sich bringt. Ein weiterer Vorteil ist, dass der Kunde bei dem klassischen Einkauf vor dem Kauf das Produkt begutachten kann und ggf. bei einem Verkaufsberater in der Verkaufsstätte auf Grundlage eines persönlichen Gesprächs Informationen austauschen kann. Nachteilig bei dem klassischen Einkauf vor Ort in einer Verkaufsstätte sind aber die eingangs erwähnten Probleme.

### AUFGABE DER ERFINDUNG

Der Erfindung liegt die Aufgabe zugrunde, ein Verfahren, eine Software sowie ein mobiles Endgerät vorzuschlagen, dass oder die für einen herkömmlichen Einkauf eines Produkts vor Ort in einer Verkaufsstätte eine Unterstützung liefern kann.

### LÖSUNG

Die Aufgabe der Erfindung wird erfindungsgemäß mit einem Verfahren mit den Merkmalen des unabhängigen Patentanspruchs 1 gelöst. Weitere Ausgestaltungen eines derartigen Verfahrens ergeben sich entsprechend den abhängigen Patentansprüchen 2-20. Eine weitere Lösung der der Erfindung zugrunde liegenden Aufgabe ist gegeben durch eine Software mit den Merkmalen des Patentanspruchs 21. Schließlich stellt ein mobiles Endgerät mit den Merkmalen des Patentanspruchs 22 auch eine Lösung der Aufgabe der Erfindung dar.

### BESCHREIBUNG DER ERFINDUNG

Die vorliegende Erfindung soll zunächst, nämlich im folgenden Absatz, anhand eines sehr spezifischen Beispiels erörtert werden, ohne dass hierbei eine Einschränkung der Erfindung auf dieses spezifische Beispiel erfolgen soll, während in darauf folgenden Absätzen die auf allgemeiner Basis erläutert werden:
Ein Benutzer oder Kunde gibt mindestens ein Produkt vor, welches dieser zukünftig in einer Verkaufsstätte wie ein Warenhaus oder ein Handelsunternehmen begutachten möchte und ggf. kaufen möchte. Dieser Kauf soll zu einem beliebigen spezifischen oder unspezifischen Zeitpunkt in der Zukunft erfolgen. Bewegt sich der Benutzer mit einem mobilen Endgerät wie beispielsweise ein Handheld oder ein Mobiltelefon (u. U. zu einem völlig anderweitigen Zweck) im Bereich von Verkaufsstätten, beispielsweise im Bereich einer Einkaufspassage oder Fußgängerzone, erhält der Benutzer über sein mobiles Endgerät automatisiert eine Nachricht, dass das zuvor ausgewählte Produkt in einer Verkaufsstätte, die der Benutzer gerade passiert, gekauft werden kann. Hierbei erfolgt die automatisierte Information nicht bereits aufgrund der Tatsache, dass das Produkt grundsätzlich in der Verkaufsstätte gehandelt wird, sondern die Information erfolgt nur nach Abfrage eines (aller Voraussicht nach oder tatsächlich gegebenen) Bestands des Produkts in der Verkaufsstätte .

Das erfindungsgemäße Verfahren findet Einsatz zur Unterstützung des Einkaufs beliebiger Produkte, beispielsweise so genannte "weiße Ware" und/oder "braune Ware", Musik, Filme, elektronische Spiele, Hörbücher, Bücher, Consumer Electronics, Spielwaren, um nur einige zu nennen.

Das Verfahren basiert auf einem mobilen Endgerät beliebiger Ausgestaltung, welches von einem Benutzer mit sich geführt wird. Insbesondere handelt es sich bei dem mobilen Endgerät um ein so genanntes "Handheld", welches ein tragbares, elektronisches Gerät mit eigener mitgeführter Stromversorgung und so klein und leicht sein kann, dass es bei der Nutzung mit nur einer Hand gehalten werden kann, insbesondere ein Personal Information Manager (PIM), ein Electronic Organizer, ein Personal Digital Assistent, ein Pocket Computer, ein Personal Mobile Tool, ein Mobiltelefon, ein Outdoor-Navigationsgerät, ein GPS-Empfänger u. ä. Ein derartiges mobiles Endgerät verfügt über eine CPU, mittels welcher zumindest einige der erfindungsgemäßen Verfahrensschritte durchführbar sind. Des Weiteren ist das mobile Endgerät netzwerkfähig, so dass dieses mit mindestens einem weiteren Rechner verbindbar ist.

In dem Verfahren findet mindestens ein Rechner Einsatz, auf dem Daten verfügbar sind, die aktuelle Bestände von Produkten in mehreren Verkaufsstätten an unterschiedlichen Standorten betreffen. Das mobile Endgerät und der Rechner mit den Daten über die Bestände der Produkte sind über ein zumindest teilweise nicht drahtgebundenes Netzwerk miteinander verbunden oder verbindbar, wobei zwischen Rechner und mobiles Endgerät beliebige Netzpunkte und/oder Verarbeitungseinheiten zwischengeschaltet sein können.

Für das erfindungsgemäße Verfahren werden die folgenden Verfahrensschritte durchgeführt:
a) Zunächst erfolgt durch den Benutzer die Vorgabe mindestens eines Produkts, dessen Kauf der Benutzer beabsichtigt. Diese Vorgabe kann bspw. direkt an dem mobilen Endgerät erfolgen, wobei der Benutzer das Produkt u. U. anhand einer geeigneten Kennzeichnung spezifiziert, beispielsweise Hersteller, Produktbezeichnung, Produktkennzeichnung, Produktnummer u. ä. Möglich ist aber durchaus auch, dass die Vorgabe des Produkts an dem Rechner oder einem anderen Rechner, beispielsweise über ein Einkaufs-Portal, erfolgt. Möglich ist, dass dem Benutzer bei der Vorgabe des Produkts anhand von Suchkriterien eine Produktauswahl angeboten wird, aus welcher der Benutzer dann eine geeignete Auswahl treffen kann.
b) Für die sich verändernde Position des mobilen Endgeräts, wenn dieses von dem Benutzer mit sich geführt wird, wird eine aktuelle Position des mobilen Endgeräts - und damit des Benutzers - ermittelt. Dies kann auf beliebige, an sich bekannte Verfahrensweisen erfolgen. Beispielsweise beinhalten Handhelds oder Mobiltelefone ohnehin GPS-Sensoren, auf deren Grundlage die aktuelle Position in dem mobilen Endgerät verfügbar ist. Ebenfalls möglich wäre die Ermittlung der aktuellen Position aus dem Empfangsort eines drahtlos übertragenen Signals eines Mobiltelefons, um nur ein weiteres mögliches Beispiel zu nennen.
c) In einem weiteren Verfahrensschritt erfolgt dann eine Prüfung, ob in einer Verkaufsstätte in der Nähe der aktuellen Position des mobilen Endgeräts ein Bestand des Produkts gegeben ist oder ob sich eine Verkaufsstätte, in der ein Bestand des Produkts gegeben ist, in der Nähe der aktuellen Position des mobilen Endgeräts befindet. Nur wenn das Ergebnis dieser Prüfung positiv ist, wird automatisiert eine Information an dem mobilen Endgerät erzeugt, dass das Produkt, dessen Kauf der Benutzer beabsichtigt, in der Verkaufsstätte in der Nähe der ermittelten Position des mobilen Endgeräts verfügbar ist. Eine derartige Information kann beliebig sein, beispielsweise als eine Vibration des mobilen Endgeräts, Signalton, Signalanzeige auf einem Display o. ä. ausgebildet sein.

Durch die erfindungsgemäße Ausgestaltung kann letztendlich automatisiert ein Benutzer davon in Kenntnis gesetzt werden, dass ein Produkt ohne großen Aufwand in seiner Nähe gekauft werden kann, auch wenn sich der Kunde gerade nicht mit einem derartigen Kauf beschäftigt und u. U. auch einen Kauf vergessen würde.

In weiterer Ausgestaltung der Erfindung wird in einem weiteren Verfahrensschritt mindestens eine Verkaufsstätte ermittelt, an welcher aktuell ein Bestand des Produkts, dessen Kauf der Benutzer beabsichtigt, gegeben ist. Dieses kann über ein verteiltes Netzwerk oder an einem zentralisiertem Rechner oder Server oder einem Internet-Portal erfolgen unter Zusammenführung von Daten hinsichtlich der Verkaufstätten selbst sowie des Bestands der Produkte in einer Verkaufsstätte. Aus einem Vergleich der Standorte von Verkaufsstätten und der ermittelten aktuellen Position des mobilen Endgeräts wird darüber hinaus mindestens eine Verkaufsstätte ermittelt, deren Standort sich in der Nähe der aktuellen Position des mobilen Endgeräts befindet. Diese ermittelte mindestens eine Verkaufsstätte kann somit von dem Benutzer mit geringem Aufwand aufgesucht werden.

Es versteht sich, dass die Reihenfolge der Durchführung der zuvor genannten Verfahrensschritte beliebig ist. Ebenfalls ist für den erfindungsgemäßen Grundgedanken nicht von Bedeutung, an welcher Stelle in dem Netzwerk die einzelnen Verfahrensschritte durchgeführt werden. Während grundsätzlich möglich ist, dass die Daten an dem mobilen Endgerät zur Verfügung gestellt werden und somit die erläuterten Ermittlungen an dem mobilen Endgerät selbst durchgeführt werden, erfolgt vorzugsweise die Übertragung der aktuellen Position des mobilen Endgeräts zu einem Server, Rechner oder Verkaufsportal, wo dann die Aufbereitung in Form der Ermittlung der genannten Daten erfolgt.

In weiterer Ausgestaltung des erfindungsgemäßen Verfahrens kann deren Nutzen erhöht werden, indem eine Liste von Produkten vorgegeben wird, deren Kauf der Benutzer beabsichtigt. Für diese Ausgestaltung kann dann der Benutzer informiert werden, wenn selektive Produkte aus der Liste in seiner Nähe verfügbar sind. Ebenfalls denkbar ist, dass die automatisierte Nachricht lediglich dann erzeugt wird, wenn sämtliche Produkte aus der Liste in einer einzigen Verkaufsstätte verfügbar sind. Möglich ist auch, dass die Information für den Benutzer in Abhängigkeit davon aufbereitet wird, wie viele Produkte der Liste in seiner Nähe in einer Verkaufsstätte verfügbar sind. Um lediglich ein Beispiel zu nennen, kann ein entsprechender Signalton in Lautstärke, Tonhöhe oder Länge variiert werden in Abhängigkeit von der Zahl der Produkte, die in der Verkaufsstätte verfügbar sind. Es versteht sich, dass auch möglich ist, dass der Benutzer zwischen unterschiedlichen der vorgenannten Möglichkeiten selektieren kann.

In weiterer Ausgestaltung der Erfindung wird dem Benutzer nicht lediglich zur Kenntnis gebracht, dass in einer Verkaufsstätte, beispielsweise mit Nennung des Namens derselben, das Produkt verfügbar ist. Gemäß einer Variante enthält die an dem mobilen Endgerät erzeugte Information auch die Entfernung zwischen dem mobilen Endgerät und der ermittelten Verkaufsstätte, so dass der Benutzer anhand dieser Informationen entscheiden kann, ob er die Verkaufsstätte aufsucht. Werden mehrere Verkaufsstätten in der Nähe angezeigt, kann der Benutzer auch anhand der in der Verkaufsstätte verfügbaren Produkte und/oder der Entfernung entscheiden, welche Verkaufsstätte er aufsucht.

Ergänzend ist möglich, dass an dem mobilen Endgerät ein Preis des Produkts als Information bereitgestellt wird. Selbstverständlich können auch beliebige ergänzende Produktinformationen zur Verfügung gestellt werden. Für eine besonders vorteilhafte Ausgestaltung des erfindungsgemäßen Verfahrens beinhaltet die Information, die an dem mobilen Endgerät bereitgestellt wird, eine Wegbeschreibung und/oder eine Richtungsangabe (beispielsweise in der Art eines Kompasses) zu der ermittelten Verkaufsstätte. Möglich ist, dass für die Wegbeschreibung automatisiert eine Nutzung einer Art Navigationssystem erfolgt, welches bereits auf einigen Mobiltelefonen oder mobilen Endgeräten implementiert ist.

Weiterhin kann es von Vorteil sein, wenn zusätzlich Informationen zu den Öffnungszeiten der ermittelten Verkaufsstätte übermittelt werden, anhand derer der Benutzer vermeiden kann, dass dieser eine Verkaufsstätte aufsucht, die bereits geschlossen hat oder in Kürze schließt.

Soll eine Suche des Benutzers in der Verkaufsstätte nach dem Produkt möglichst kurz gehalten werden, kann an dem mobilen Endgerät auch eine Information bereitgestellt werden hinsichtlich des Produktstandorts des Produkts in der Verkaufsstätte. Beispielsweise kann es sich hierbei um die Angabe eines Stockwerks, eines Teilbereichs einer Verkaufsfläche, einer Abteilung, einer Kennziffer für einen Bereich o. ä. handeln, die dann der Benutzer unmittelbar aufsuchen kann.

Möglich ist, dass das Verfahren automatisiert ständig durchgeführt wird. Insbesondere zur Schonung von Energieressourcen ist es vorteilhaft, wenn das Verfahren automatisiert an vorbestimmten Zeitpunkten oder innerhalb vorbestimmter Zeitabstände durchgeführt wird.

Alternativ oder zusätzlich ist es möglich, dass das Verfahren ereignisbasiert durchgeführt wird. Um nur einige Beispiele zu nennen kann dass Verfahren ausgeführt werden, wenn Kreuzungspunkte einer Fußgängerzone passiert werden oder aus einem Bewegungsprofil des Benutzers (bspw. keine eilige Änderung der aktuellen Position) geschlossen wird, dass der Benutzer Zeit für einen zusätzlichen Einkauf hätte.

Ebenfalls denkbar ist, dass das Verfahren auf manuelle Veranlassung des Benutzers durchgeführt wird.

Eine weitere Ausgestaltung der Erfindung trägt der Tatsache Rechnung, dass viele Benutzer Vorlieben für einzelne Verkaufsstätten haben, während andere Verkaufsstätten nicht so gern aufgesucht werden. Hier schlägt die Erfindung vor, dass für die Information des Benutzers über Verkaufsstätten mit Bestand und in der Nähe einer ermittelten aktuellen Position in Abhängigkeit davon erfolgt, welche Verkaufsstätten der Kunde in der Vergangenheit bevorzugt oder überhaupt aufgesucht hat bzw. wo der Kunde bevorzugt eingekauft hat. Hierzu wird in dem erfindungsgemäßen Verfahren gespeichert, in welcher Verkaufsstätte ein Einkauf durch den Kunden erfolgt ist. Diese Verkaufsstätten werden dann in dem erfindungsgemäßen Verfahren priorisiert oder ausschließlich berücksichtigt.

Im Rahmen der Durchführung der genannten Verfahrensschritte kann das mobile Endgerät über das zumindest teilweise drahtlose Netzwerk unmittelbar mit einem Rechner in der Verkaufsstätte in der Nähe des mobilen Endgeräts kommunizieren. Dies erfordert aber, dass die Rechner in den Verkaufsstätten geeignet ausgestattet werden, insbesondere mit einer entsprechenden Software und Sende- und Empfangseinheiten.

Für einen weiteren Vorschlag der Erfindung kommuniziert das mobile Endgerät über das Netzwerk mit einem "zentralen Rechner", der insofern zentral ist, dass dieser für mehrere Verkaufsstätten zuständig ist. Auf diesem zentralen Rechner sind Daten verfügbar, welche aktuelle Bestände von Produkten in mehreren Verkaufsstätten getrennt nach ihren Standorten betreffen. Hierbei kann ein Internet-Portal genutzt werden, an welchem bereits der Benutzer das Produkt, an dessen Kauf er interessiert ist, vorgegeben hat. Das mobile Endgerät kommuniziert dann mit diesem Internet-Portal und dem zugeordneten Server, der dann ggf. die Information für das mobile Endgerät aufbereitet und an dieses sendet.

Für die Prüfung, ob sich eine Verkaufsstätte in der Nähe der aktuellen Position des mobilen Endgeräts befindet, gibt es vielfältige Möglichkeiten. Gemäß einem Vorschlag der Erfindung wird die ermittelte Entfernung zwischen dem mobilen Endgerät und einer Verkaufsstätte mit einem Schwellenwert verglichen. Eine Verkaufsstätte wird als in der Nähe zu dem mobilen Endgerät befindlich eingestuft, wenn die Entfernung kleiner ist als der Schwellenwert. Vereinfacht gesagt kann bspw. eine Verkaufsstätte als in der Nähe zum Endgerät angeordnet angesehen werden, wenn die Entfernung kleiner als 500 m (oder ein anderer Entfernungswert) ist. Hierbei kann die Entfernung in "Luftlinie" berücksichtigt werden oder eine tatsächlich zurückzulegende Entfernung, bspw. auf Grundlage eines Navigationssystems.

In weiterer Ausgestaltung dieses Lösungsgedankens kann der Schwellenwert variabel sein. Beispielsweise kann dieser durch den Benutzer vorgebbar sein. Durchaus denkbar ist, dass der Benutzer aus unterschiedlichen Schwellenwertklassen wählen kann. Ebenfalls möglich ist, dass der Benutzer für unterschiedliche von ihm gewünschte Produkte unterschiedliche Schwellenwerte angibt, mit deren Unterschreitung dann die automatisierte Information an das mobile Endgerät erfolgt.

Ebenfalls möglich ist, dass der Schwellenwert automatisiert von einem Bewegungsprofil des mobilen Endgeräts abhängig ist. Beispielsweise kann aus einem Bewegungsprofil ermittelt werden, ob sich der Benutzer mit dem mobilen Endgerät in Eile bewegt, womit vorzugsweise keine Information über mögliche Käufe erfolgen soll, während für ein ruhigeres Bewegungsprofil für einen größeren Schwellenwert eine Information erfolgen kann. Ebenfalls denkbar ist, dass für den eiligen Benutzer unabhängig von der ermittelten Entfernung überhaupt keine Information erfolgt. Weiterhin kann in dem Bewegungsprofil die Maximalgeschwindigkeit, die Geschwindigkeitsänderung u. ä. ermittelt werden, so dass insbesondere festgestellt werden kann, ob der Benutzer als Fußgänger unterwegs ist, mit dem Fahrrad oder mit dem Kraftfahrzeug. Dementsprechend kann dann eine Anpassung des anzusetzenden Schwellenwerts erfolgen, so dass beispielsweise mit erhöhter Geschwindigkeit des Fortbewegungsmittels ein größerer Schwellenwert zum Einsatz kommt.

Für einen weiteren Vorschlag der Erfindung ist das zuvor erläuterte Verfahren in einer erfindungsgemäßen Software (oder einem Software-Modul oder einer so genannten "Application" oder "App") umgesetzt.

Schließlich schlägt die Erfindung ein mobiles Endgerät vor, welches mit einer derartigen Software ausgestattet ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.

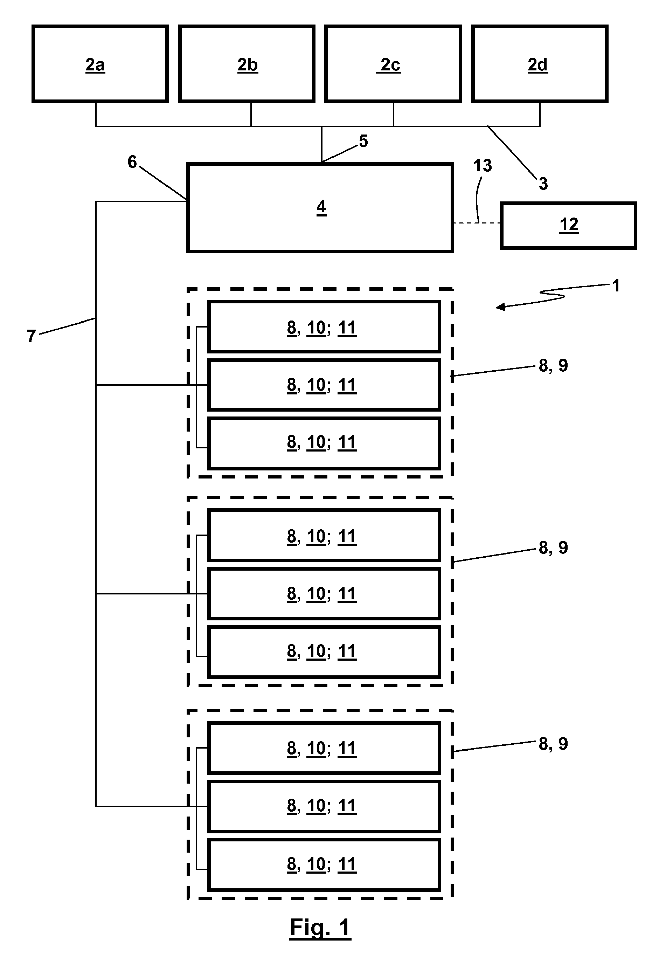

- Fig. 1: zeigt ein schematisches Blockschaltbild eines Netzwerks, in welches ein erfindungsgemäßes mobiles Endgerät integrierbar ist und welches zur Ausführung des erfindungsgemäßen Verfahrens geeignet ist.

### FIGURENBESCHREIBUNG

Fig. 1 zeigt ein Netzwerk 1, in welches stationäre Rechner 2a, 2b, 2c, 2d integriert sind. Diese Rechner 2 sind Benutzern oder Kunden zugeordnet, so dass der Kunde über die Rechner 2 mit dem Netzwerk 1 kommunizieren kann. Bei den Rechnern 2 handelt es sich beispielsweise um einen PC, ein mobiles Endgerät oder ein Mobiltelefon mit einem Internet-Zugang. Insbesondere erfolgt über die Rechner 2 eine Kommunikation mit einem Internet-Portal. Die Rechner 2 sind für die Kommunikation sowie die Erzeugung der Ausgabe des Internet-Portals mit geeigneten Eingabeeinheiten wie Tastaturen, Ausgabeeinheiten wie Bildschirmen, Druckern, Datenspeichereinheiten wie Festspeicherlaufwerke ausgestattet. Die Rechner 2 sind über Leitungsverbindungen 3, hier das Internet, mit einem Server 4 verbunden. Der Server 4 besitzt eine Schnittstelle 5, über welche dieser mit den Rechnern 2 kommunizieren kann. Über die Schnittstelle 5 erfolgt mit den Rechnern 2 insbesondere ein Datenaustausch. Hierbei kann über den Server 4 und den Datenaustausch an den Rechnern 2 eine geeignete Ausgabe für ein Internet-Portal erfolgen. Über dieses Internet-Portal kann dann an den Rechnern 2 eine Abfrage eines Produkts erfolgen, welches der Kunde oder Benutzer kaufen möchte. Möglich ist, dass an dem Internet-Portal geeignete Suchoptionen bereitgestellt werden zur Suche eines gewünschten Produkts. Ebenfalls möglich ist, dass über den Server 4 oder das Internet-Portal dem Kunden ergänzende Informationen zur Unterstützung der Produktwahl bereitgestellt werden.

Weiterhin befindet sich in dem Netzwerk 1 ein mobiles Endgerät 12, welches mit dem Benutzer mitgeführt wird und welches über eine zumindest teilweise drahtlose Verbindung 13 unmittelbar oder mittelbar mit dem Server 4 oder dem Internet-Portal verbunden ist. Während wie zuvor dargestellt die Vorgabe eines Produkt an einem Rechner 2 erfolgen kann, ist es ebenfalls möglich, dass die Vorgabe des Produkts, dessen Kauf der Benutzer beabsichtigt, durch das mobile Endgerät 12 erfolgt. Das mobile Endgerät 12 ermittelt eine aktuelle Position desselben und damit des Benutzers und überträgt diese über die drahtlose Verbindung 13 zu dem Server 4 bzw. dem Internet-Portal 5. Der Server 4 besitzt darüber hinaus eine Schnittstelle 6, über welche dieser über Leitungsverbindungen 7, insbesondere das Internet, mit Verkaufsstätten 8 kommunizieren kann.

Bei den Verkaufsstätten 8 kann es sich um die in Fig. 1 gestrichelt dargestellten Handelsketten 9 handeln, in welchen unterschiedliche Handelsunternehmen 10 oder Standorte 11 desselben Handelsunternehmens zusammengefasst sind. Ebenfalls möglich ist, dass es sich bei einer Verkaufsstätte 8 um eine unabhängige Verkaufsstätte handelt.

Den Verkaufsstätten 8 ist jeweils einzeln oder mehreren Verkaufsstätten ist gemeinsam ein Warenwirtschaftssystem zugeordnet, bei welchem es sich um ein computergestütztes Netzwerk mit Software handelt einschließlich einer Funktion, über welche die Warenströme in der einzelnen Verkaufsstätte 8 oder mehreren zusammengefassten Verkaufsstätten 8 aktuell erfasst und abgebildet werden. Die Software des Warenwirtschaftssystems umfasst permanent oder flüchtig gespeicherte Daten zu Beständen. Für ein Warenwirtschaftssystem, welches einer einzigen Verkaufsstätte 8 zugeordnet ist, betreffen diese Bestände diese einzige Verkaufsstätte. Für den Fall, dass ein Warenwirtschaftssystem für mehrere Verkaufsstätten 8 zuständig ist, werden vorzugsweise die Bestände für die jeweiligen Verkaufsstätten 8 einzeln geführt. Für eine Handelskette 9 kann ein zentrales Warenwirtschaftssystem zum Einsatz kommen, welches aber dann die Bestände der einzelnen zugeordneten Handelsunternehmen 10 und/oder Standorte 11 einzeln berücksichtigt. Die Bestände werden aktuell gehalten, indem die Übergabe von Waren an einen Käufer in den Verkaufsstätten 8 aktuell in dem Warenwirtschaftssystem berücksichtigt wird. Beispielsweise kann das Produkt an der Kasse der Verkaufsstätte 8 erfasst werden. Kommuniziert die Kasse mit dem Warenwirtschaftssystem, kann mit dem Verkauf eines Produktes an der Verkaufsstätte 8 der Bestand an dieser Verkaufsstätte 8 um die Zahl 1 in dem Warenwirtschaftssystem reduziert werden. Das Warenwirtschaftssystem kommuniziert beispielsweise mit einer Kassenschnittstelle, aber auch mit der Leitungsverbindung 7 sowie der Schnittstelle 6 zu dem Server 4 über geeignete, u. U. standardisierte Schnittstellen, insbesondere Edifact, Datanorm, GAEB, DATEV, VDA, XML, CSV. Ein derartiges Warenwirtschaftssystem kann als offenes, geschlossenes und integriertes Warenwirtschaftssystem ausgebildet sein, wobei dieses insbesondere ein Wareneingangsmodul, ein Warenausgangsmodul, ein Dispositions- und Bestellwesenmodul, eine Ausgabe von Dispositionshilfen und Bestellvorschlägen, Bestellbeschreibungen und/oder Überwachungs- und Marketing-Management-Informationsmodule besitzt - fehlen einzelne der vorgenannten Module, handelt es sich um ein offenes Warenwirtschaftssystem. Ein integriertes Warenwirtschaftssystem hingegen findet dann Anwendung, wenn alle oben genannten Module vorhanden sind und zusätzlich noch Verbindungen nach außen bestehen, nämlich im vorliegenden Fall über die Leitungsverbindung 7 mit der Schnittstelle 6 des Servers 4. In dem Warenwirtschaftssystem greift eine Anwendungssoftware auf eine Datenbank zurück, die Stammdaten und Bewegungsdaten mit folgender Datenbankstruktur verwaltet: Stammdaten sind die in Datensätzen verwalteten Objekte, vor allem Kunden, Lieferanten, Waren oder Produkte und Stücklisten. Bezogen auf diese werden die Bewegungsdaten, die verwalteten wirtschaftlichen Transaktionen in Form von Geld und Waren usw. in eigenen Datensätzen erfasst. Unter einem Warenwirtschaftssystem im Rahmen der vorliegenden Erfindung wird auch ein so genanntes "Enterprise Resource Planning-System" verstanden.

Über die Schnittstelle 6 erfolgt im Rahmen des erfindungsgemäßen Verfahrens insbesondere ein Datenaustausch im Rahmen der folgenden Verfahrensschritte:
- Ermitteln eines aktuellen Bestands eines vorgegebenen Produkts in mindestens einer Verkaufsstätte 8 unter Zugriff auf ein der Verkaufsstätte 8 zugeordnetes Warenwirtschaftssystem - hier kann von dem Server 4 über die Schnittstelle 6 konkret eine Anfrage an eine spezifische Verkaufsstätte 8 nach dem aktuellen Bestand unter Zugriff auf das zugeordnete Warenwirtschaftssystem gerichtet werden oder es wird an mehrere Verkaufsstätten 8 oder lediglich Verkaufsstätten 8 in der Nähe der ermittelten Position eines mobilen Endgeräts 12 angefragt oder es werden sämtliche Verkaufsstätten 8 angefragt, wobei über die Schnittstelle 6 und zugeordnete Leitungsverbindung 7 mit mehreren unterschiedlichen, ansonsten nicht miteinander zusammenarbeitenden Warenwirtschaftssystemen kommuniziert werden kann. Von den abgefragten Warenwirtschaftssystemen wird dann über die Leitungsverbindung 7 und Schnittstelle 6 dem Server der Bestand in Form von entsprechenden Daten übermittelt;
- Weiterhin können derart ausgetauschte Daten nicht nur den aktuellen Bestand betreffen, sondern auch eine zukünftige Entwicklung des Bestands betreffen. Hierbei kann bereits von dem Warenwirtschaftssystem eine Verfügbarkeitsprognose für die Zukunft erstellt sein, die dann über geeignete Daten über die Schnittstelle 6 an den Server 4 übermittelt wird. Ebenfalls möglich ist, dass lediglich Daten über die Schnittstelle 6 zum Server 4 übertragen werden, auf Grundlage derer dann in dem Server 4 eine Verfügbarkeitsprognose bzw. eine Entwicklung des Bestands für die Zukunft ermittelt wird.
- Ebenfalls von den Verkaufsstätten 8 über die Schnittstelle 6 übertragen werden können Daten hinsichtlich etwaigen Nachlieferungen oder Wiederbefüllungen der Bestände, beispielsweise Nachliefertermine und Stückzahlen für eine derartige Nachlieferung.
- Daten hinsichtlich des Bestands an den Verkaufsstätten 8 können nicht auf Anfrage durch den Server 4 geliefert werden. Vielmehr kann bei einer Veränderung des Bestands an einer Verkaufsstätte 8 automatisiert, ständig oder turnusgemäß, beispielsweise nach vorgegeben Zeitintervallen; eine Übertragung von zugeordneten Daten von einer Verkaufsstätte 8, einem Verbund mehrerer Verkaufsstätten 8 oder einem Warenwirtschaftssystem über die Schnittstelle 6 zu dem Server 4 erfolgen.

Auf dem Server 4 ist eine Software geeignet ausgebildet, um die zuvor erläuterten Datenflüsse über die Schnittstellen 5, 6 zu steuern. Weiterhin ist die Software auf dem Server 4 geeignet ausgebildet, um die folgenden Verfahrensschritte auszuführen:
- Liegt eine ermittelte Position des mobilen Endgeräts 12 vor, ermittelt die Software den Abstand einer oder mehrerer Verkaufsstätten, deren Position beispielsweise aus einer Datenbank bekannt ist, von der ermittelten Position des mobilen Endgeräts 12.
- Weiterhin ermittelt die Software mindestens eine Verkaufsstätte 8, in welcher aktuell ein Bestand des Produkts, dessen Kauf der Benutzer des mobilen Endgeräts 12 beabsichtigt, gegeben ist.
- Es kann geprüft werden, ob sich eine Verkaufsstätte in der Nähe der aktuellen Position des mobilen Endgeräts 12 befindet. Dies kann durch Vergleich mit einem Schwellenwert, beispielsweise einer Entfernung < 500 m, erfolgen.
- Es kann geprüft werden, ob in einer Verkaufsstätte 8 in der Nähe der aktuellen Position des mobilen Endgeräts 12 ein Bestand des Produkts gegeben ist oder ob sich eine Verkaufsstätte 8, in der ein Bestand des Produkts gegeben ist, in der Nähe der aktuellen Position des mobilen Endgeräts 12 befindet.
- Für den Fall, dass die vorgenannte Prüfung zu dem Ergebnis führt, dass ein Kauf des Produkts in der Nähe möglich ist, sendet das Internet-Portal oder der Server 4 mittels der Software eine Information an das mobile Endgerät 12, dass das Produkt, dessen Kauf der Benutzer beabsichtigt, in der Verkaufsstätte 8, in der Nähe des mobilen Endgeräts 12 verfügbar ist.
- Unter Umständen werden ergänzende Informationen wie ein Preis des Produkts in der Verkaufsstätte 8, die Entfernung des mobilen Endgeräts 12 von der ermittelten Verkaufsstätte 8, eine Wegbeschreibung und/oder eine Richtungsangabe zu der Verkaufsstätte 8, die Öffnungszeiten der Verkaufsstätte 8, ein Produktstandort der Verkaufsstätte 8 o. ä. an das mobile Endgerät 12 durch die Software übermittelt, wobei derartige ergänzende Informationen einer Datenbank entnommen werden können.
- Das Senden der ermittelten Position des mobilen Endgeräts 12 und die Prüfung, ob sich eine Verkaufsstätte 8 mit einem Bestand des gewünschten Produkts in der Nähe befindet, kann durch die Software automatisiert an vorbestimmten Zeitpunkten oder innerhalb vorbestimmter Zeitabstände durchgeführt werden, ereignisbasiert durchgeführt werden oder auf manuelle Veranlassung des Benutzers, beispielsweise durch Vorgabe eines entsprechenden Signals über das mobile Endgerät 12.
- Weiterhin kann in der Software eine Priorisierung der einzelnen Verkaufsstätten vorgenommen werden, wobei eine Priorisierung in Abhängigkeit davon erfolgen kann, in welchen Verkaufsstätten 8 der Kunde in der Vergangenheit bevorzugt eingekauft hat.
- Weiterhin kann durch die Software des Rechners eine Bewertung eines Bewegungsprofils oder von Positionsdaten, welche(s) von dem mobilen Endgerät 12 übermittelt worden ist/sind, vornehmen, während ebenfalls möglich ist, dass eine derartige Erstellung und Auswertung eines Bewegungsprofils bereits in dem Endgerät 12 selbst erfolgt und dann nur das Ergebnis dieser Auswertung an den Server 4 bzw. die Software des Rechners 4 übermittelt wird.
- Möglich ist auch, dass die Software an dem mobilen Endgerät 12 eine Ausgabe erzeugt, in welcher Verkaufsstätten 8 sortiert sind nach Ihrer Entfernung von der ermittelten Position des mobilen Endgeräts 12 bei gleichzeitiger Berücksichtigung lediglich der Verkaufsstätten, für die ein aktueller Bestand des Produkts gegeben ist.
- Die Ermittlung der Entfernung zwischen der Position des mobilen Endgeräts 12 einerseits und den Verkaufsstätten 8 kann in "Luftlinie" erfolgen. Ebenfalls denkbar ist, dass in dem mobilen Endgerät 12 oder auf dem Server 4 oder der Software ein Navigationssystem Einsatz findet, in welchem eine tatsächliche Entfernung ermittelt wird, die bei Zurücklegung der vorhandenen Wege und Straßen einschlägig ist.
- Weiterhin kann eine Ausgabe in dem mobilen Endgerät 12 über die Software erfolgen, in welcher bereits eine Wegbeschreibung enthalten ist, insbesondere in der Art eines Navigationssystems.
- Möglich ist, dass über die Software Daten abgerufen werden und Daten gespeichert werden, welche das Kaufverhalten des Kunden in der Vergangenheit betreffen. Über die Software erfolgt dann ebenfalls eine Auswertung dahingehend, dass bevorzugt oder nur Verkaufsstätten an dem mobilen Endgerät 12 automatisiert angezeigt werden, in welchen der Kunde in der Vergangenheit bevorzugt eingekauft hat.
- Möglich ist weiterhin, dass über die Software eine Bewertung der ermittelten Bestände erfolgt und je nach Größe des Bestands eine Modifikation der für den Kunden erzeugten Ausgabe an dem mobilen Endgerät 12 erfolgt. Beispielsweise kann ein Vergleich des Bestands des Produkts an einer Verkaufsstätte 8 mit einem Schwellwert erfolgen, so dass eine Berücksichtigung in der Ausgabe des mobilen Endgeräts 12 für diese Verkaufsstätte 8 nur erfolgt, wenn mehr als beispielsweise 10 Produkte im Bestand sind.
- Möglich ist auch, dass über die Software eine Verfügbarkeitsprognose für den Bestand für die Zukunft erstellt wird und/oder Informationen berücksichtigt werden, ob mit einer Lieferung weiterer Produkte zu rechnen ist.

Von Bedeutung kann sein, dass eine Produkt- oder Wunschliste des Kundens mit vorgegebenen Produkten aktualisiert wird, indem Produkte aus dieser Liste entfernt werden können, wenn der Benutzer, beispielsweise auf Grundlage der Inaugenscheinnahme des Produkts in einer Verkaufsstätte 8, die Entscheidung trifft, dass dieses Produkt doch nicht gekauft werden soll. Auch sinnvoll ist die Anpassung einer Produkt- oder Wunschliste für den Fall, dass der Benutzer dieses Produkt bereits in einer Verkaufsstätte 8 gekauft hat. In diesem Zusammenhang ist es vorteilhaft, wenn die Software die Produktliste 4 aktualisiert. Denkbar ist hier, dass der Benutzer über das mobile Endgerät 12 die Information an den Server 4 übermittelt, dass das Produkt aus der Produktliste gestrichen werden kann. Ebenfalls denkbar ist, dass im Bereich der Verkaufsstätten 8 die Maßnahmen ergriffen werden, um die Produktliste zu modifizieren. So kann beispielsweise ein Kassensystem bei Kauf des Produkts und Identifikation des mobilen Endgeräts 12 bzw. dessen Benutzers automatisiert eine Information über die Verbindung 7 an den Server 4 und die Software übermitteln, so dass ein gekauftes Produkt aus der Produktliste automatisiert gestrichen wird. Ebenfalls möglich ist, dass die Produktlisten auch an einem Terminal oder Rechner in der Verkaufsstätte 8 zur Verfügung steht, wo der Benutzer dann das zu streichende Produkt selektieren und aus der Produktliste streichen kann mit automatischer Übertragung der aktualisierten Produktliste oder des zu streichenden Produkts von diesem Terminal an den Server 4.

Im Folgenden wird ein mögliches erfindungsgemäßes Verfahren mit den einzelnen Verfahrensschritten beschrieben, die optional, alternativ oder kumulativ in beliebiger Reihenfolge verwirklicht sein können:
- Zunächst ruft ein Kunde an seinem Rechner 2 das Internet-Portal auf, womit über die Software des Servers 4 an dem Rechner 2 eine entsprechende Ausgabe erzeugt wird.
- Über das Internet-Portal wird am Rechner 2 des Kunden dann beispielsweise ein Produkt abgefragt, dessen Kauf der Kunde wünscht.
- Das von dem Kunden ausgewählte Produkt wird dann von dem Server 4 gespeichert oder einer bereits gespeicherten Produktliste hinzugefügt.
- Bewegt sich der Kunde mit dem mobilen Endgerät 12, beispielsweise in einer Einkaufsstraße, überträgt das mobile Endgerät 12 über die Verbindung 13 die ermittelte aktuelle oder abgeschätzte Position des mobilen Endgeräts an den Server 4.
- In vorgegebenen Zeitintervallen überprüft der Server 4, das Internet-Portal oder die zugeordnete Software, ob sich der Benutzer mit dem mobilen Endgerät 12 einer Verkaufsstätte 8 bis auf eine vorgegebene minimale Entfernung annähert.
- Unterschreitet die Entfernung des mobilen Endgeräts 12 von der Verkaufsstätte 8 einen Mindestabstand (Schwellenwert der Entfernung), fragt der Server 4 den Bestand des gewünschten Produkts oder mehrerer Produkte aus der Produktliste in der Verkaufsstätte 8 ab, was ummittelbar durch Kommunikation mit der Verkaufsstätte 8, deren Warenwirtschaftssystem und/oder durch Abgleich mit von der Verkaufsstätte 8 entstammenden Daten, die auf dem Server 4 und zugeordneten Speichereinheiten abgespeichert sind, erfolgen kann.
- Wird ein Bestand oder ein ausreichender Bestand in einer Verkaufsstätte 8 in der Nähe des mobilen Endgeräts 12 ermittelt, wird über die Verbindung 13 eine geeignete Information an das mobile Endgerät 12 übermittelt, auf Grundlage welcher der Benutzer informiert wird, dass das Produkt in der Nähe gekauft werden kann.

Es versteht sich, dass abweichend zu den obigen Verfahrensschritten auch zunächst eine Liste der Verkaufsstätten erstellt werden kann, an welchen ein aktueller Bestand der Produkte gegeben ist. Dann erfolgt lediglich die Ermittlung der Entfernung des mobilen Endgeräts 12 von dieser Untergruppe der Verkaufsstätten 8, an denen das Produkt verfügbar ist.

Möglich ist ebenfalls, dass der Kunde auf Grundlage der an seinem mobilen Endgerät 12 vorliegenden Informationen bereits unmittelbar oder über den Server 4 Kontakt zu der ermittelten Verkaufsstätte 8 aufnimmt und dann bereits das Produkt zur Abholung vorbereitet und bereitgestellt werden kann.

Möglich ist weiterhin, dass von dem mobilen Endgerät 12 oder den Rechnern 4, beispielsweise in dem erzeugten Internet-Portal, eine Vorauswahl einzelner Verkaufsstätten, beispielsweise aus einer einzigen Handelskette mit deren unterschiedlichen Filialen, erfolgt, so dass lediglich eine Information über eine in der Nähe gelegene Verkaufsstätte 8 aus dieser einzigen Handelskette erfolgt.

Es versteht sich, dass die zuvor erläuterte Software in einzelnen separaten Module realisiert sein kann, die dem Rechner 4, den Rechnern 2 und/oder dem mobilen Endgerät 12 zugeordnet sein können. Ebenfalls möglich ist, dass das Netzwerk 1 anderweitig ausgebildet ist. Um lediglich ein Beispiel zu nennen, kann zwischen den Server 4 und die Verkaufsstätten 8 oder die Handelsketten 9 ein weiterer Server und/oder eine weitere Datenbank zwischengeschaltet sein mit zugeordneter Software, welcher/welche Daten hinsichtlich des Bestands von Produkten an den Verkaufsstätten 8 von diesen erhält und aufbereitet und diese in ein geeignetes Datenformat für eine Übergabe an den Server 4 umwandelt. Beispielsweise kann es sich bei dem geeigneten Datenformat um einen tabellarischen Export handeln, welcher den Bestand für die einzelnen Verkaufsstätten 8 beinhaltet. Hierbei kann eine Aktualisierung durch den weiteren Server ständig oder in einem vorgegebenen regelmäßigen oder unregelmäßigen Turnus erfolgen und die Daten können ständig oder in einem gleichen oder abweichenden Turnus von dem weiteren Server zu dem Server 4 übertragen werden. Der weitere Server kann hierbei neben der Belieferung des Servers 4 einer Belieferung weiterer Abnehmer der Daten dienen.

Ein Produkt kann im Rahmen der vorliegenden Erfindung in der Kommunikation mit dem Kunden und/oder intern in dem Netzwerk gemäß Fig. 1 durch seine EAN spezifiziert werden.

Möglich ist, dass der Server 4 oder der zuvor genannte weitere Server unmittelbar mit den Warenwirtschaftssystemen der Verkaufsstätten 8 kommuniziert und/oder diese in Echtzeit über einen Web-Service abfragen und sich so ständig aktualisieren. Ebenfalls möglich ist eine Anbindung an Warenwirtschaftssysteme in Echtzeit über einen ESB (Enterprise Service Bus).

Zur Vereinfachung der Vorgabe eines Produkts ist es möglich, dass an dem Internet-Portal lediglich eine Gattungsbezeichnung für eine Produktart abgefragt wird und dann dem Kunden eine Vielzahl von möglichen Produkten innerhalb dieser Gattungsbezeichnung angeboten werden, ggf. unter Bereitstellung von Zusatzinformationen zu den Unterschieden zwischen den einzelnen Produkten. Ergebnis der Vorgabe des Produkts kann ein eindeutig identifizierbares Produkt sein. Möglich ist auch, dass mehrere, globalere Spezifikationen des Kunden erfüllende Produkte Ergebnis der Abfrage sind. Beispielsweise kann ein vergleichbares Produkt von mehreren Herstellern vorgegeben werden, wenn dem Kunden egal ist, welches dieser Produkte er letztendlich kaufen möchte. Der Kunde wird dann automatisiert informiert, wenn er sich in der Nähe einer Verkaufsstätte befindet, in welcher eines der vergleichbaren Produkte angeboten wird, die die globalere Spezifikation erfüllen.

Erfindungsgemäß wird ein aktueller Bestand des Produkts in der Verkaufsstätte berücksichtigt, nicht ein veralteter Bestand. Unter aktueller Bestand wird ein Bestand verstanden, welcher allenfalls dem Bestand am Vortag oder dem Vorabend entspricht oder lediglich um Minuten oder wenige Stunden von dem Zeitpunkt der Ermittlung und Prüfung abweicht. Im Idealfall handelt es sich um den tatsächlichen aktuellen Bestand. Eine derartige Ermittlung des aktuellen Bestands kann ermöglicht werden, wenn erfindungsgemäß auf ein unmittelbar der Verkaufsstätte zugeordnetes Warenwirtschaftssystem zugegriffen wird, so dass der in dem Verfahren berücksichtigte Bestand dem Bestand in dem Warenwirtschaftssystem entspricht.

Möglich ist weiterhin, dass das erfindungsgemäße Verfahren nicht sämtliche Verkaufsstätten berücksichtigt, sondern lediglich Verkaufsstätten berücksichtigt, die in einem vorgegebenen Umkreis positioniert sind. Beispielsweise kann der Benutzer einmal die erfindungsgemäße Funktion starten. Zu diesem Start-Zeitpunkt wird eine Position ermittelt, die beispielsweise auf die Stadt hindeutet, in welcher sich der Benutzer befindet. Im Umkreis von dieser Start-Position von beispielsweise 5 km werden dann sämtliche Verkaufsstätten 8 ermittelt, die in dem erfindungsgemäßen Verfahren im Folgenden berücksichtigt werden sollen. Für diese erfolgt dann für die Bewegung des Benutzers mit dem mobilen Endgerät 12 die ständige oder zeitlich beabstandete Ermittlung der Entfernung des mobilen Endgeräts 12 von den Verkaufsstätten 8. Es versteht sich, dass eine derartige Start-Position nicht lediglich durch manuelle Vorgabe oder Start des Benutzers vorgegeben werden kann, sondern beispielsweise in Intervallen abgefragt werden kann, wobei diese Intervalle abweichend von den Intervallen, innerhalb welcher dann die Ermittlung erfolgt, ob sich in unmittelbarer Nähe des mobilen Endgeräts 12 eine Verkaufsstätte 8 befindet, ausgebildet sein können. Es versteht sich, dass der Benutzer auch über die Vorgabe einer Postleitzahl, einer Adresse oder eines Namens einer Stadt eine Vorauswahl von einem zu berücksichtigenden Gebiet und einer Teilgruppe von Verkaufsstätten 8 vornimmt.

In dem Rechner 2, dem Server 4 und dem mobilen Endgerät 12 sind die jeweiligen Daten einem Benutzer zugeordnet und für diesen zugeordnet gespeichert und an die anderen genannten Netzwerkelemente kommuniziert. Beispielsweise kann dies durch Eingabe eines Benutzer-Passworts oder einer anderweitigen Benutzerkennung erfolgen.

Es kann sein, dass für den Zeitpunkt der Information an das mobile Endgerät 12 in der Verkaufsstätte 8 in der Nähe ein Bestand des Produkts vorhanden ist, aber in der Zwischenzeit, bis der Kunde die Verkaufsstätte aufgesucht hat, der Bestand auf Null reduziert ist, so dass der Kunde die Verkaufsstätte 8 umsonst aufgesucht hätte. Für die Vermeidung derartiger Probleme schlägt die Erfindung vor, dass in der Ausgabe an dem mobilen Endgerät 12 berücksichtigt wird, ob der Bestand der Produkte an einer Verkaufsstätte 8 größer ist als ein Schwellwert, beispielsweise ob in der Verkaufsstätte mehr als 2, 5 oder 35 Produkte vorhanden sind. Liegt der Bestand der Produkte unterhalb dieses Schwellwerts, wird vorzugsweise für diese Verkaufsstätte keine Information an den Benutzer des mobilen Endgeräts 12 übermittelt.

Möglich ist, dass von dem Internet-Portal oder dem Rechner 4 an das mobile Endgerät 12 auch Zusatzinformationen wie Produktinformationen, Produktpräsentationen o. ä. übermittelt werden, bei denen es sich um Metadaten oder Mediadaten handeln kann. Handelt es sich bei dem Produkt beispielsweise um eine Musik-CD, so können so genannte Hooks, also Teilausschnitte von Musikstücken, Tracks, Informationen über den Sänger oder die Band, das Musikstück, Veröffentlichungsmedien u. ä. übermittelt werden.

Weitere Details eines möglichen Netzwerks und möglicher Verfahrensmerkmale für den Betrieb eines derartigen Netzwerks sind der nicht vorveröffentlichten europäischen Patentanmeldung mit dem amtlichen Aktenzeichen EP 09 180 633.1 der Anmelderin zu entnehmen.

### BEZUGSZEICHENLISTE

- 1: Netzwerk
- 2: Rechner
- 3: Leitungsverbindung
- 4: Server
- 5: Schnittstelle
- 6: Schnittstelle
- 7: Leitungsverbindung
- 8: Verkaufstätte
- 9: Handelskette
- 10: Handelsunternehmen
- 11: Standort
- 12: mobiles Endgerät
- 13: drahtlose Verbindung

## Patentansprüche

1. Verfahren zur Unterstützung des Einkaufs von Produkten mit
- einem mobilen Endgerät (12), welches von einem Benutzer mit sich geführt wird,
- mindestens einem Rechner (4), auf welchem Daten verfügbar sind, welche aktuelle Bestände von Produkten in mehreren Verkaufsstätten (8) an unterschiedlichen Standorten betreffen,
- wobei das mobile Endgerät (12) und der Rechner (4) mit den Daten über die Bestände der Produkte über ein zumindest teilweise nicht drahtgebundenes Netzwerk miteinander verbunden oder verbindbar sind,
mit folgenden Verfahrensschritten:
a) Vorgabe mindestens eines Produkts, dessen Kauf der Benutzer beabsichtigt,
b) Ermittlung der aktuellen Position des mobilen Endgeräts (12),
c) Prüfung, ob in einer Verkaufsstätte (8) in der Nähe der aktuellen Position des mobilen Endgeräts (12) ein Bestand des Produkts gegeben ist oder ob sich eine Verkaufsstätte (8), in der ein Bestand des Produkts gegeben ist, in der Nähe der aktuellen Position des mobilen Endgeräts (12) befindet,
d) falls das Ergebnis der Prüfung gemäß c) positiv ist: automatische Erzeugung einer Information an dem mobilen Endgerät (12), dass das Produkt, dessen Kauf der Benutzer beabsichtigt, in der Verkaufsstätte (8) in der Nähe der ermittelten Position des mobilen Endgeräts verfügbar ist.

2. Verfahren nach Anspruch 1, **gekennzeichnet durch** folgende Verfahrensschritte:
a) Ermittlung mindestens einer Verkaufsstätte (8), in welcher aktuell ein Bestand des Produkts, dessen Kauf der Benutzer beabsichtigt, gegeben ist,
b) Ermittlung mindestens einer Verkaufsstätte (8), deren Standort sich in der Nähe der aktuellen Position des mobilen Endgeräts (12) befindet.

3. Verfahren nach Anspruch 1 oder 2, **dadurch gekennzeichnet, dass** auf dem mobilen Endgerät (12) eine Liste mit Produkten vorgegeben wird, deren Kauf der Benutzer beabsichtigt.

4. Verfahren nach einem der vorhergehenden Ansprüche, **dadurch gekennzeichnet, dass** die an dem mobilen Endgerät (12) erzeugte Information eine Angabe einer Entfernung zwischen dem mobilen Endgerät (12) und der Verkaufsstätte (8) in der Nähe der aktuellen Position des mobilen Endgeräts (12) beinhaltet.

5. Verfahren nach einem der vorhergehenden Ansprüche, **dadurch gekennzeichnet, dass** die an dem mobilen Endgerät (12) erzeugte Information mehrere Verkaufsstätten (8) in der Nähe der aktuellen Position des mobilen Endgeräts (12) beinhaltet.

6. Verfahren nach einem der vorhergehenden Ansprüche, **dadurch gekennzeichnet, dass** die an dem mobilen Endgerät (12) erzeugte Information einen Preis des Produkts beinhaltet.

7. Verfahren nach einem der vorhergehenden Ansprüche, **dadurch gekennzeichnet, dass** die Information eine Wegbeschreibung und/oder eine Richtungsangabe zu der Verkaufsstätte (8) in der Nähe der aktuellen Position des mobilen Endgeräts (12) beinhaltet.

8. Verfahren nach einem der vorhergehenden Ansprüche, **dadurch gekennzeichnet, dass** die Information Öffnungszeiten der Verkaufsstätte (8) in der Umgebung der ermittelten Position des mobilen Endgeräts (8) beinhaltet.

9. Verfahren nach einem der vorhergehenden Ansprüche, **dadurch gekennzeichnet, dass** die Information einen Produktstandort in der Verkaufsstätte (8) in der Umgebung der ermittelten Position des mobilen Endgeräts (12) beinhaltet.

10. Verfahren nach einem der vorhergehenden Ansprüche, **dadurch gekennzeichnet, dass** das Verfahren automatisiert an vorbestimmten Zeitpunkten oder innerhalb vorbestimmter Zeitabstände durchgeführt wird.

11. Verfahren nach einem der vorhergehenden Ansprüche, **dadurch gekennzeichnet, dass** das Verfahren ereignisbasiert durchgeführt wird.

12. Verfahren nach einem der vorhergehenden Ansprüche, **dadurch gekennzeichnet, dass** das Verfahren auf manuelle Veranlassung des Benutzers durchgeführt wird.

13. Verfahren nach einem der vorhergehenden Ansprüche, **dadurch gekennzeichnet, dass** Verkaufsstätten (8) priorisiert berücksichtigt werden, bei denen der Kunde in der Vergangenheit eingekauft hat.

14. Verfahren nach einem der vorhergehenden Ansprüche, **dadurch gekennzeichnet, dass** das mobile Endgerät (12) über das Netzwerk mit einem Rechner in der Verkaufsstätte (8) in der Nähe des mobilen Endgeräts (12) kommuniziert.

15. Verfahren nach einem der vorhergehenden Ansprüche, **dadurch gekennzeichnet, dass** das mobile Endgerät (8) über das Netzwerk mit einem zentralen Rechner (4) kommuniziert, auf welchem Daten verfügbar sind, welche aktuelle Bestände von Produkten in mehreren Verkaufsstätten (8) getrennt nach ihren Standorten betreffen.

16. Verfahren nach einem der vorhergehenden Ansprüche, **dadurch gekennzeichnet, dass** die ermittelte Entfernung zwischen dem mobilen Endgerät (12) und einer Verkaufsstätte (8) mit einem Schwellenwert verglichen wird und eine Verkaufsstätte (8) als in der Nähe zu dem mobilen Endgerät (12) befindlich eingestuft wird, wenn die Entfernung kleiner als der Schwellenwert ist.

17. Verfahren nach Anspruch 16, **dadurch gekennzeichnet, dass** der Schwellenwert von dem Benutzer vorgebbar ist.

18. Verfahren nach Anspruch 17, **dadurch gekennzeichnet, dass** der Schwellenwert für unterschiedliche Produkte individuell vorgebbar ist.

19. Verfahren nach Anspruch 16, **dadurch gekennzeichnet, dass** der Schwellenwert von einem Bewegungsprofil des mobilen Endgeräts (12) abhängig ist.

20. Verfahren nach einem der vorhergehenden Ansprüche, **dadurch gekennzeichnet, dass** eine Priorisierung des Kaufs unterschiedlicher Produkte vorgenommen wird.

21. Software zur Durchführung eines Verfahrens nach einem der Ansprüche 1 bis 20.

22. Mobiles Endgerät (12) mit einer Software nach Anspruch 21.
